(19) Europäisches Patentamt / European Patent Office / Office européen des brevets

(11) **EP 3 183 319 B1**

(12) **FASCICULE DE BREVET EUROPEEN**

(45) Date de publication et mention
de la délivrance du brevet:
**02.01.2019 Bulletin 2019/01**

(21) Numéro de dépôt: **15756685.2**

(22) Date de dépôt: **12.08.2015**

(51) Int Cl.:
**C09K 11/77** *(2006.01)*

(86) Numéro de dépôt international:
**PCT/FR2015/052198**

(87) Numéro de publication internationale:
**WO 2016/027027 (25.02.2016 Gazette 2016/08)**

(54) **PROCEDE DE FABRICATION D'UN MATERIAU PHOTOLUMINESCENT**

VERFAHREN ZUR HERSTELLUNG EINES PHOTOLUMINESZENTEN MATERIALS

METHOD FOR PRODUCING A PHOTO-LUMINESCENT MATERIAL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.08.2014 FR 1457877**

(43) Date de publication de la demande:
**28.06.2017 Bulletin 2017/26**

(73) Titulaires:
  • **Aledia**
    **38040 Grenoble (FR)**
  • **UNIVERSITE CLERMONT AUVERGNE**
    **63000 Clermont-Ferrand (FR)**
  • **Centre National de la Recherche Scientifique**
    **75794 Paris Cedex 16 (FR)**
  • **SIGMA CLERMONT**
    **63178 Aubière Cedex (FR)**

(72) Inventeurs:
  • **ABOULAICH, Abdelhay**
    **F-63100 Clermont-Ferrand (FR)**
  • **CHADEYRON, Geneviève**
    **F-63118 Cebazat (FR)**
  • **MAHIOU, Rachid**
    **F-63100 Clermont-Ferrand (FR)**

(74) Mandataire: **Cabinet Beaumont**
    **4, Place Robert Schuman**
    **B.P. 1529**
    **38025 Grenoble Cedex 1 (FR)**

(56) Documents cités:
  **FR-A1- 2 978 448      US-A1- 2009 208 398**

  • **POTDEVIN A ET AL: "Sol-gel based YAG : Tb3+
    or Eu3+ phosphors for application in lighting
    sources; Sol-gel based YAG : Tb3+ or Eu3+
    phosphors in lighting sources", JOURNAL OF
    PHYSICS D: APPLIED PHYSICS, INSTITUTE OF
    PHYSICS PUBLISHING LTD, GB, vol. 38, no. 17,
    7 septembre 2005 (2005-09-07), pages 3251-3260,
    XP020083325, ISSN: 0022-3727, DOI:
    10.1088/0022-3727/38/17/S29**
  • **A. POTDEVIN ET AL: "Sol-gel based YAG:Ce3+
    powders for applications in LED devices",
    PHYSICA STATUS SOLIDI (C), vol. 4, no. 1, 1
    janvier 2007 (2007-01-01) , pages 65-69,
    XP055182212, ISSN: 1610-1634, DOI:
    10.1002/pssc.200673550**
  • **ABDELHAY ABOULAICH ET AL: "Ce-Doped YAG
    Nanophosphor and Red Emitting CuInS 2 /ZnS
    Core/Shell Quantum Dots for Warm White
    Light-Emitting Diode with High Color Rendering
    Index", ACS APPLIED MATERIALS &
    INTERFACES, vol. 6, no. 1, 8 janvier 2014
    (2014-01-08) , pages 252-258, XP055182213,
    ISSN: 1944-8244, DOI: 10.1021/am404108n**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 183 319 B1

## Description

La présente demande de brevet revendique la priorité de la demande de brevet français FR14/57877 qui sera considérée comme faisant partie intégrante de la présente description.

### Domaine

La présente demande concerne les matériaux photoluminescents, notamment les aluminates ayant des propriétés de luminescence, et les procédés de préparation de tels matériaux photoluminescents.

### Exposé de l'art antérieur

Les matériaux photoluminescents sont utilisés notamment pour la préparation de revêtements fluorescents, en particulier pour la fabrication d'écrans d'affichage, de projecteurs, en particulier des écrans à plasma, des lampes pour le rétroéclairage des écrans à cristaux liquides, des diodes électroluminescentes, des lampes d'éclairage à excitation plasma, des lampes trichromatiques, etc.

Un exemple de matériau photoluminescent est le grenat d'yttrium et d'aluminium (YAG, sigle anglais pour Yttrium Aluminium Garnet) activé par l'ion cérium trivalent, également appelé YAG:Ce ou YAG:Ce$^{3+}$. Ce matériau photoluminescent est notamment utilisé pour générer de la lumière blanche après association avec une diode électroluminescente (DEL) bleue. Pour ce faire, la DEL bleue est recouverte d'un revêtement contenant des particules de YAG:Ce$^{3+}$. Une partie de la lumière bleue est convertie en lumière jaune par le revêtement photoluminescent, ce qui permet d'obtenir la lumière blanche.

Les matériaux photoluminescents, notamment du type YAG:Ce, sont de façon générale fabriqués par des réactions à l'état solide. Des précurseurs solides d'aluminium, d'yttrium et de cérium, sous forme de poudres, sont mélangés, broyés et chauffés à hautes températures, par exemple à des températures supérieures à 1600°C, pour former une poudre de particules ayant la composition et la phase cristalline souhaitées. Un recuit de la poudre est ensuite réalisé sous atmosphère réductrice, généralement sous hydrogène (H$_2$), pour réduire les ions Ce$^{4+}$, qui n'ont pas de propriétés de photoluminescence, et qui agissent comme des pièges pour les porteurs de charge, en ions Ce$^{3+}$ qui ont les propriétés de photoluminescence recherchées.

Un procédé de fabrication par réactions à l'état solide présente plusieurs inconvénients. En effet, il peut être difficile d'obtenir des poudres de précurseurs avec une faible variabilité de tailles de particules. En outre, il peut être difficile de réaliser un mélange parfaitement homogène des poudres de précurseurs. La poudre du matériau photoluminescent obtenue peut alors avoir une composition chimique hétérogène qui va conduire à une diminution de l'intensité de photoluminescence du matériau. De plus, l'étape de recuit sous atmosphère réductrice est une étape qui peut être délicate à mettre en oeuvre en raison de la dangerosité du dihydrogène.

Il est connu de réaliser un composé YAG:Ce par un procédé sol-gel. L'utilisation du procédé sol-gel permet de contourner la plupart des inconvénients liés aux réactions à l'état solide puisque le mélange des précurseurs est réalisé et contrôlé en solution à l'échelle moléculaire. En particulier, on obtient une meilleure homogénéité chimique, une meilleure distribution de l'ion Ce$^{3+}$ dans la matrice YAG et une plus faible variabilité de taille de particules. Toutefois, les performances en termes de rendement lumineux des composés YAG:Ce obtenus par les procédés sol-gel actuels sont nettement inférieures à celles des composés YAG fabriqués par réactions en phase solide.

La publication de Potdevin et al. intitulée "Sol-gel based YAG:Tb3+ or Eu3+ phosphors for application in lighting sources" (Journal of Physics D: Applied Physics, Institute of Physics Publishing LTD, GB, vol. 38, n°. 17, 7 septembre 2005, pages 3251-3260) décrit la synthèse par la voie sol-gel de films et particules de YAG:Tb$^{3+}$ et YAG:Eu$^{3+}$. La publication de Potdevin et al. intitulée "Sol-gel based YAG:Ce3+ powders for application in LED devices" (Physica Status Solidi (C), vol. 4, n°. 1, 1er janvier 2007, pages 65-69) décrit la synthèse par la voie sol-gel de poudres de YAG:Ce$^{3+}$, LuAG: Ce$^{3+}$ et YAG:Ce$^{3+}$,Tb$^{3+}$. Le document FR 2 978 448 décrit un matériau composite comprenant un matériau polymère dans lequel sont réparties des particules fluorescentes contenant une terre rare. Le document US 2009/208398 décrit un procédé de synthèse solvothermale de particules inorganiques. La publication de Abdelhay Aboulaich et al. intitulée "Ce-Doped YAG Nanophosphor and Red Emitting CuInS2/ZnS Core/Shell Quantum Dots for Warm White Light-Emitting Diode with High Color Rendering Index" (ACS Applied Materials & Interfaces, vol. 6, n°. 1, 8 janvier 2014, pages 252-258) décrit la synthèse de nanoparticules de YAG:Ce et leur association avec des boîtes quantiques CIS/ZnS.

### Résumé

Un objet d'un mode de réalisation vise à pallier tout ou partie des inconvénients des procédés de fabrication de tels matériaux décrits précédemment.

Un mode de réalisation prévoit également un procédé de fabrication d'un matériau photoluminescent, comprenant les étapes suivantes :

(1) fabrication selon un procédé sol-gel d'un sol puis d'un gel de premiers précurseurs d'une première substance à partir du sol, la première substance étant un aluminate ou un silicate ;
(2) broyage du gel ;
(3) éventuellement, recuit du gel pour la formation de premières particules de la première substance dont la taille moyenne est comprise entre 1 $\mu$m et 20 $\mu$m ;
(4) fabrication d'une dispersion colloïdale de deuxièmes particules d'une deuxième substance photoluminescente, différente de la première substance ou identique à la première substance, dont la taille moyenne est comprise entre 5 nm et 400 nm, la deuxième substance étant un aluminate, un silicate, un nitrure, un fluorure ou un sulfure, l'étape (4) comprenant une étape de synthèse solvo-thermale des deuxièmes particules ;
(5) mélange de la dispersion colloïdale au sol à l'étape (1) avant la formation du gel ou aux premières particules après l'étape (3) ; et
(6) recuit du mélange obtenu à l'étape (5), d'où il résulte une augmentation de la compacité du mélange, la taille moyenne des deuxièmes particules après recuit étant comprise entre 100 nm et 900 nm.

Selon un mode de réalisation, l'étape de recuit à l'étape (6) est réalisée à une température comprise entre 1100°C et 1700°C.
Selon un mode de réalisation, la dispersion colloïdale est dans un solvant comprenant au moins un alcool.
Selon un mode de réalisation, la première substance photoluminescente comprend des microparticules de YAG:Ce et la deuxième substance photoluminescente comprend des nanoparticules de YAG:Ce préparées par voie solvo-thermale.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 est une vue en coupe, partielle et schématique, d'un mode de réalisation d'un matériau photoluminescent ;
les figures 2, 3 et 4 représentent chacune, sous la forme d'un schéma-bloc, un mode de réalisation d'un procédé de fabrication du matériau photoluminescent représenté en figure 1 ;
la figure 5 est une photographie obtenue par microscopie électronique à balayage d'une poudre de microparticules photoluminescentes ;
la figure 6 est une photographie obtenue par microscopie électronique en transmission d'une poudre de nanoparticules avant recuit ;
la figure 7 représente des courbes d'évolution de l'intensité de photoluminescence d'une poudre de nanoparticules photoluminescentes avant et après recuit à différentes températures ;
la figure 8 est une photographie obtenue par microscopie électronique à balayage d'un mélange de poudres de microparticules et de nanoparticules photoluminescentes selon un mode de réalisation d'un procédé de fabrication du matériau photoluminescent ;
la figure 9 représente des courbes d'évolution de l'intensité de photoluminescence d'une poudre de microparticules photoluminescentes et d'un mélange de poudres de microparticules photoluminescentes et de nanoparticules photoluminescentes selon un mode de réalisation d'un procédé de fabrication du matériau photoluminescent ;
la figure 10 est une figure analogue à la figure 9 pour un autre mode de réalisation d'un procédé de fabrication du matériau photoluminescent ;
la figure 11 est une photographie analogue à la figure 8 pour un autre mode de réalisation d'un procédé de fabrication du matériau photoluminescent ; et
la figure 12 est une figure analogue à la figure 10 pour un autre mode de réalisation d'un procédé de fabrication du matériau photoluminescent.

Description détaillée

Par souci de clarté, de mêmes éléments ont été désignés par de mêmes références aux différentes figures. En outre, dans la suite de la description, les expressions "sensiblement", "environ" et "approximativement" signifient "à 10 % près".
Le terme "particule" tel qu'utilisé dans le cadre de la présente demande doit être compris dans un sens large et correspond non seulement à des particules compactes ayant plus ou moins une forme sphérique mais aussi à des particules anguleuses, des particules aplaties, des particules en forme de flocons, des particules en forme de fibres, ou des particules fibreuses, etc. On comprendra que la "taille" des particules dans le cadre de la présente invention signifie la plus petite dimension transversale des particules. A titre d'exemple, dans le cas de particules en forme de fibres, la taille des particules correspond au diamètre des fibres. On entend par particules d'un matériau les particules prises individuellement (c'est-à-dire les éléments unitaires du matériau) sachant que le matériau peut se présenter sous la forme d'agglomérats de particules.

Par le terme "taille moyenne", on entend selon la présente invention la taille de la particule qui est supérieure à la taille de 50 % en volume des particules et inférieure à la taille de 50 % en volume des particules d'une distribution de particules. Ceci correspond au $d_{50}$. La granulométrie des particules peut être mesurée par granulométrie laser en utilisant, par exemple, un Malvern Mastersizer 2000.

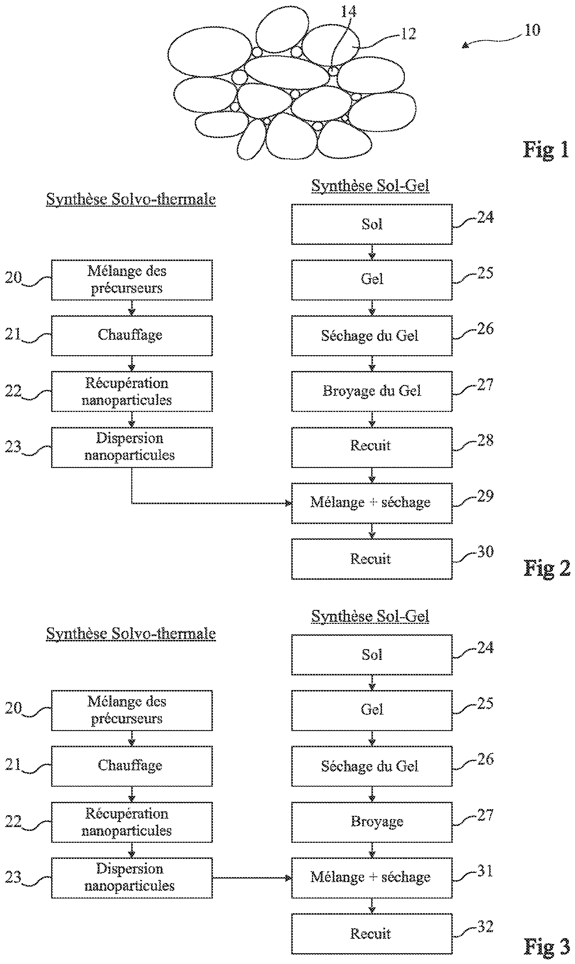

La figure 1 est une vue en coupe, partielle et schématique, d'un mode de réalisation d'un matériau photoluminescent 10. Le matériau 10 comprend des premières particules 12 d'une première substance photoluminescente et des deuxièmes particules 14 d'une deuxième substance photoluminescente. La taille moyenne des deuxièmes particules 14 est inférieure à la taille moyenne des premières particules 12. Les particules 14 tendent notamment à remplir les espaces présents entre les particules 12.

Selon un mode de réalisation, la taille moyenne des premières particules 12 est comprise entre 1 $\mu$m et 20 $\mu$m, de préférence entre 1 $\mu$m et 10 $\mu$m, encore plus préférentiellement entre 1 $\mu$m et 8 $\mu$m.

Selon un mode de réalisation, la taille moyenne des deuxièmes particules 14 est comprise entre 100 nm et 900 nm, de préférence entre 400 nm et 900 nm.

Dans la suite de la description, les premières particules sont appelées microparticules et les deuxièmes particules sont appelées nanoparticules.

Selon un mode de réalisation, les première et deuxième substances photoluminescentes ont sensiblement la même composition chimique. Selon un mode de réalisation, les première et deuxième substances photoluminescentes sont différentes.

La première substance photoluminescente et la deuxième substance photoluminescente peuvent être chacune indépendamment un aluminate ou un silicate, émettant de la lumière à une longueur d'onde dans la gamme allant de 400 à 700 nm sous excitation lumineuse dont la longueur d'onde est dans la gamme allant de 300 à 500 nm, ou de préférence de 400 à 480 nm. La deuxième substance photoluminescente peut également être un nitrure, un fluorure ou un sulfure.

De préférence, la première substance photoluminescente et la deuxième substance photoluminescente peuvent être chacune indépendamment un aluminate, notamment un grenat d'aluminium et d'yttrium selon la formule (1) suivante :

$$(Y_{3-x}R^1_x)(Al_{5-y}R^2_y)O_{12} \qquad (1)$$

où $R^1$ et $R^2$ sont indépendamment choisis parmi les éléments comprenant les terres rares, les alcalino-terreux et les métaux de transition et x et y varient chacun et indépendamment de 0 à 1,5, de préférence de 0 à 1. De préférence, $R^1$ et $R^2$ sont indépendamment choisis parmi le groupe comprenant le cérium, le samarium, le gadolinium, le silicium, le baryum, le terbium, le strontium, le chrome, le praséodyme et le gallium.

A titre d'exemple de nitrures absorbant et émettant de la lumière dans les gammes de longueur d'onde souhaitées, on peut citer : $CaAlSiN_3$:Eu, (Ca,Sr)AlSiN$_3$:Eu, Ca$_2$Si$_5$N$_8$:Eu ou (Ca,Sr)Si$_5$N$_8$:Eu.

A titre d'exemple de fluorures absorbant et émettant de la lumière dans les gammes de longueur d'onde souhaitées, on peut citer les fluorures de formule K$_2$MF$_6$:Mn (où M peut être Si, Ge, Sn ou Ti).

A titre d'exemple de sulfures absorbant et émettant de la lumière dans les gammes de longueur d'onde souhaitées, on peut citer : CaS:Eu, SrCa:Eu, (Sr,Ca)S:Eu et SrGa$_2$S$_4$:Eu.

A titre d'exemple d'aluminate absorbant et émettant de la lumière dans les gammes de longueur d'onde souhaitées, on peut citer : Y$_3$Al$_5$O$_{12}$:Ce, (Y,Gd)$_3$Al$_5$O$_{12}$:Ce, Tb$_3$Al$_5$O$_{12}$, (Y,Tb)$_3$Al$_5$O$_{12}$, Lu$_3$Al$_5$O$_{12}$ :Ce et Y$_3$(Al,Ga)$_5$O$_{12}$.

A titre d'exemple de silicates absorbant et émettant de la lumière dans les gammes de longueur d'onde souhaitées, on peut citer : (Sr,Ba)$_2$SiO$_4$:Eu, Sr$_2$SiO$_4$:Eu, Ba$_2$SiO$_4$:Eu, Ca$_2$SiO$_4$:Eu, Ca$_3$SiO$_5$:Eu et Sr$_3$SiO$_5$:Eu.

Le rapport massique dans le matériau photoluminescent 10 des microparticules 12 par rapport aux nanoparticules 14 est compris entre 0,01 et 99, de préférence entre 0,1 et 50, encore plus préférentiellement entre 0,4 et 10.

La figure 2 représente, sous la forme d'un schéma-bloc, un mode de réalisation d'un procédé de fabrication du matériau photoluminescent 10 représenté en figure 1.

Selon un mode de réalisation, le procédé comprend la fabrication des nanoparticules 14 par synthèse solvo-thermale, la fabrication des microparticules 12 par un procédé sol-gel et l'ajout des nanoparticules 14 à l'une des étapes de la fabrication des microparticules 12.

Les étapes 20 à 23 concernent la fabrication des nanoparticules par synthèse solvo-thermale.

A l'étape 20, le procédé comprend le mélange des précurseurs de la deuxième substance photoluminescente dans un premier solvant ou un mélange de premiers solvants, par exemple un diol (appelé aussi glycol), un mélange de diols ou un solvant à longue chaîne hydrocarbure saturée ou insaturée mélangé avec un tensioactif. Le premier solvant peut également être un tensioactif ou un mélange de tensioactifs comme l'acide oléique et l'oleylamine. Dans tous les cas, le premier solvant ou le mélange de premiers solvants jouent à la fois le rôle de solvant et de stabilisant pour les nanoparticules. Les précurseurs peuvent être des acétates, des nitrates, des chlorures et/ou des carbonates. A titre d'exemple, dans le cas où la deuxième substance photoluminescente est un YAG:Ce, un précurseur de l'yttrium est l'acétate d'yttrium (III) hydraté, un précurseur de l'aluminium est l'isopropoxyde d'aluminium et un précurseur du cérium est l'acétate de cérium (III) hydraté. Une agitation du mélange de précurseurs dans le premier solvant ou le mélange de premiers solvants peut être réalisée. Le procédé se poursuit à l'étape 21.

A l'étape 21, la solution obtenue est chauffée, par exemple dans un autoclave, pour favoriser les réactions entre les précurseurs. La température de chauffage peut être comprise entre 100°C et 300°C, de préférence entre 200°C et 300°C, et encore plus préférentiellement entre 225°C et 300°C. La durée de chauffage peut être comprise entre 30 minutes et plusieurs jours, de préférence entre 30 min et 48h, et encore plus préférentiellement entre 30 min et 4h. La durée de chauffage dépend notamment de la température de chauffage, des solvants et des précurseurs utilisés. Une dispersion colloïdale de nanoparticules est obtenue à la fin de l'étape de chauffage. Le procédé se poursuit à l'étape 22.

A l'étape 22, une étape de récupération des nanoparticules est réalisée. Ceci peut comprendre une étape de précipitation des nanoparticules, par exemple par ajout d'un anti-solvant pour les nanoparticules. On entend par "anti-solvant" tout solvant qui ne présente pas d'affinité avec les nanoparticules. Le choix de cet anti-solvant va dépendre de la nature et de la chimie de surface des nanoparticules, ces solvants sont généralement des solvants polaires aprotiques comme l'acétone ou l'acétonitrile.

La phase solide contenant les nanoparticules peut être récupérée par centrifugation. On élimine ainsi les restes des précurseurs n'ayant pas réagi et les produits de réactions parasites ainsi que le ou les solvant(s) de synthèse. Les nanoparticules sont ensuite séchées, par exemple à une température comprise entre 25°C et 80°C, pendant une durée comprise entre 1 h et 12 h. Une poudre de nanoparticules est alors obtenue. Le procédé se poursuit à l'étape 23.

A l'étape 23, une dispersion colloïdale des nanoparticules est réalisée en mélangeant les nanoparticules dans un deuxième solvant, par exemple un alcool. De préférence, le deuxième solvant est différent du premier solvant et a un point d'ébullition inférieur au point d'ébullition du premier solvant. Après l'étape 23, la taille moyenne des nanoparticules est comprise entre 5 nm et 400 nm, de préférence entre 10 nm et 100 nm, encore plus préférentiellement entre 30 nm et 50 nm.

Le procédé comprend, en outre, des étapes 24 à 28 de fabrication des microparticules, par un procédé sol-gel, qui peuvent être effectuées indépendamment des étapes 20 à 23 et éventuellement au moins en partie simultanément à celles-ci.

A l'étape 24, le procédé comprend le mélange des précurseurs de la première substance photoluminescente, pour un procédé sol-gel, dans un solvant pouvant contenir, en outre, au moins un tensio-actif. Les précurseurs peuvent être des alcoxydes métalliques et/ou des sels métalliques. A titre d'exemple, dans le cas où la première substance photoluminescente est un YAG:Ce, un précurseur de l'yttrium est un chlorure d'yttrium anhydre ($YCl_3$), un précurseur de l'aluminium est l'isopropoxyde d'aluminium ($Al(OCH(CH_3)_2)_3$) et un précurseur du cérium est le chlorure de cérium anhydre ($CeCl_3$). Selon un mode de réalisation, l'étape 24 peut comprendre la formation des alcoxydes d'yttrium et de cérium à partir des précurseurs chlorures. Pour cela, les précurseurs $YCl_3$ et $CeCl_3$ sont, par exemple, d'abord dissous dans un alcool comme l'éthanol, l'isopropanol ou l'éthanolate de sodium. Après dissolution, on obtient une solution A. Ensuite, une solution alcoolique basique d'hydrure de sodium NaH ou de potassium métallique K est rajoutée à la solution A pour déclencher les réactions d'hydrolyse. Si le solvant utilisé est l'éthanolate de sodium, le rajout d'une solution basique n'est pas nécessaire, l'éthanolate de sodium étant lui-même une base forte. Le rajout de la base est réalisé sous une forte agitation et le mélange est chauffé à une température au moins égale au point d'ébullition du solvant utilisé, 85°C dans le cas de l'isopropanol. Dès l'ajout de la solution basique, on observe une réaction exothermique et un précipité blanc de chlorure de sodium NaCl ou de chlorure de potassium KCl selon la nature de la base utilisée, se forme instantanément indiquant la formation d'alcoxyde d'yttrium et de cérium, c'est la solution B. Après une heure de chauffage, une quantité déterminée d'isopropoxyde d'aluminium est pesée et ajoutée à la solution B. La réaction se poursuit alors pendant plusieurs heures, par exemple quatre heures, toujours sous agitation vigoureuse à la température mentionnée ci-dessus. A la fin de la réaction et après refroidissement, le mélange est centrifugé, par exemple à 4700 tours par minute pendant plusieurs minutes, par exemple 15 minutes, pour séparer la solution d'alcoxydes du précipité blanc formé lors de la synthèse. Cette séparation peut également être réalisée par filtration. La centrifugation est répétée 3 fois afin de s'assurer que tous les sels de NaCl ou KCl soient éliminés. A la fin de chaque centrifugation, le surnageant transparent est récupéré et le précipité blanc est ôté. Une solution limpide est alors obtenue, c'est le sol. Le procédé se poursuit à l'étape 25.

A l'étape 25, les réactions de condensation se poursuivent dans le sol. Il est observé une augmentation de la viscosité du sol jusqu'à l'obtention du gel. Le sol peut être agité pendant plusieurs heures. Selon un mode de réalisation, l'étape d'agitation du sol peut être effectuée à une température comprise entre 65°C et 80°C. Le procédé se poursuit à l'étape 26.

A l'étape 26, le procédé comprend le séchage du gel, par exemple en étuve ou à l'air libre, à une température comprise entre 25°C et 90°C. L'étape de séchage du gel peut être réalisée pendant une durée comprise entre 2 heures et 12 heures. Le séchage du gel se traduit par une densification du gel au fur et à mesure que le solvant s'évapore et que la condensation se poursuit. Le matériau obtenu à la fin de l'étape 26 qui ne contient sensiblement pas de solvant est appelé xérogel. Le procédé se poursuit à l'étape 27.

A l'étape 27, une poudre blanche est obtenue par une étape de broyage du xérogel obtenu à l'étape 26. Le broyage peut être réalisé dans un broyeur à boulets ou au mortier. Le procédé se poursuit à l'étape 28.

A l'étape 28, une étape de recuit du xérogel est réalisée pour obtenir des microparticules ayant la composition chimique et la phase cristalline souhaitées. L'étape de recuit peut être réalisée à une température comprise entre 1000°C et 1800°C, de préférence entre 1300°C et 1700°C. L'étape de recuit peut être réalisée pendant une durée comprise entre 2 heures et 10 heures, de préférence entre 3 heures et 5 heures. Le procédé se poursuit à l'étape 29.

A l'étape 29, selon un mode de réalisation, la dispersion colloïdale de nanoparticules obtenue à l'étape 23 est mélangée avec la poudre de microparticules après le recuit de l'étape 28. Une étape de séchage, par exemple à une température comprise entre 25°C et 90°C, et pendant une durée comprise entre 2 heures et 12 heures, peut être prévue pour évaporer le solvant de la dispersion colloïdale. Il est obtenu une poudre comprenant un mélange des microparticules et des nanoparticules. Le procédé se poursuit à l'étape 30.

A l'étape 30, une étape de recuit du mélange obtenu à l'étape 29 est réalisé pour obtenir le matériau photoluminescent selon le mode de réalisation de la figure 2. L'étape de recuit peut être réalisée à une température comprise entre 1100°C et 1700°C, de préférence entre 1300°C et 1700°C. L'étape de recuit peut être réalisée pendant une durée comprise entre 2 heures et 10 heures, de préférence entre 3 heures et 5 heures. La taille des nanoparticules tend à croître au cours de l'étape 30. Après l'étape 30 de recuit, la taille moyenne des nanoparticules est comprise entre 100 nm et 900 nm, de préférence entre 400 nm et 900 nm.

Les inventeurs ont mis en évidence qu'à cette étape, on observait un passage d'au moins une partie, de préférence de la majorité, plus préférentiellement sensiblement de la totalité, du cérium du nombre d'oxydation +IV au nombre d'oxydation +III pour les nanoparticules et pour les microparticules. Une explication serait que les nanoparticules obtenues par synthèse solvo-thermale sont entourées de molécules organiques jouant le rôle de stabilisants. La décomposition thermique de ces molécules, en présence d'oxygène, lors de l'étape 30 de recuit, peut conduire à la formation de gaz réducteurs qui favorisent le passage du cérium du nombre d'oxydation +IV au nombre d'oxydation +III, ou au moins, qui permettent de préserver l'état d'oxydation +III initial. L'étape de recuit améliore, en outre, la cristallinité du YAG et favorise le réarrangement des atomes de cérium dans la matrice du YAG pour une distribution plus homogène du cérium. Cela se traduit par une augmentation très importante de l'absorption de la lumière visible par le matériau après l'étape de recuit 30, comme cela apparaît dans les essais décrits par la suite.

Le mélange de poudres peut être ajouté à un liant, par exemple une résine, pour former un revêtement.

La figure 3 représente, sous la forme d'un schéma-bloc, un autre mode de réalisation d'un procédé de fabrication du matériau photoluminescent 10 représenté en figure 1.

Ce mode de réalisation comprend les étapes 20, 21, 22, 23, 24, 25, 26 et 27 décrites précédemment. Après l'étape 27, le procédé se poursuit à l'étape 31.

A l'étape 31, la dispersion colloïdale de nanoparticules obtenue à l'étape 23 est mélangée avec la poudre de xérogel obtenue à l'étape 27. Une étape de séchage, par exemple à une température comprise entre 25°C et 90°C, et pendant une durée comprise entre 2 heures et 12 heures, peut être prévue pour évaporer le solvant de la dispersion colloïdale. Il est obtenu une poudre comprenant un mélange du xérogel et de nanoparticules. Le procédé se poursuit à l'étape 32.

L'étape 32 est une étape de recuit identique à l'étape 28 décrite précédemment. Elle permet d'obtenir le matériau photoluminescent selon le mode de réalisation de la figure 3 ayant la composition chimique et la structure cristalline souhaitées tout en permettant le passage du nombre d'oxydation du cérium de +IV à +III. La taille des nanoparticules tend à croître au cours de l'étape 32. Après l'étape 32 de recuit, la taille moyenne des nanoparticules est comprise entre 100 nm et 900 nm, de préférence entre 400 nm et 900 nm.

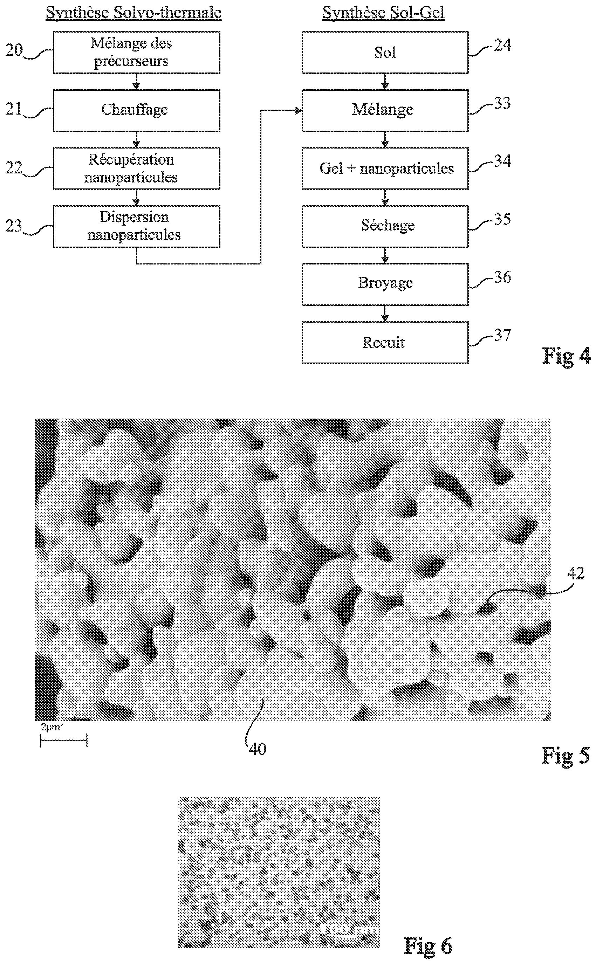

La figure 4 représente, sous la forme d'un schéma-bloc, un autre mode de réalisation d'un procédé de fabrication du matériau photoluminescent 10 représenté en figure 1.

Ce mode de réalisation comprend les étapes 20, 21, 22, 23 et 24 décrites précédemment. Après l'étape 24, le procédé se poursuit à l'étape 33.

A l'étape 33, la dispersion colloïdale de nanoparticules obtenue à l'étape 23 est mélangée avec le sol obtenu à l'étape 24, de préférence avant la formation du gel. Après gélification, il est obtenu un gel dans lequel sont dispersées les nanoparticules. Le procédé se poursuit à l'étape 35.

L'étape 35 correspond à une étape de séchage du gel analogue à l'étape 26 décrite précédemment. Un xérogel dans lequel sont dispersées les nanoparticules est obtenu. Le procédé se poursuit à l'étape 36.

L'étape 36 correspond à une étape de broyage du xérogel analogue à l'étape 27 décrite précédemment. Elle permet d'obtenir un mélange de poudre du xérogel et de nanoparticules. Le procédé se poursuit à l'étape 37.

L'étape 37 correspond à une étape de recuit analogue à l'étape 28 décrite précédemment. Elle permet d'obtenir le matériau photoluminescent 10 selon le mode de réalisation de la figure 4 ayant la composition et la structure cristalline souhaitées tout en permettant, notamment, la préservation du nombre d'oxydation +III du cérium et/ou le passage du nombre d'oxydation du cérium de +IV à +III. La taille des nanoparticules tend à croître au cours de l'étape 37. Après l'étape 37 de recuit, la taille moyenne des nanoparticules est comprise entre 100 nm et 900 nm, de préférence entre 400 nm et 900 nm.

Dans les modes de réalisation de procédés de fabrication décrits précédemment, la formation de microparticules par un procédé sol-gel et la formation de nanoparticules par synthèse solvo-thermale permettent d'obtenir une composition chimique plus homogène, puisque les microparticules et les nanoparticules sont obtenues par voie humide avec un contrôle des précurseurs à l'échelle moléculaire et mélangées les unes avec les autres en solution sous agitation, et un meilleur contrôle de la granulométrie des particules obtenues par rapport à une synthèse par réaction à l'état solide. En outre, les étapes de recuit peuvent, de façon avantageuse, être réalisées en atmosphère libre "à l'air".

Des exemples de matériaux photoluminescents ont été fabriqués selon les modes de réalisation des procédés de fabrication décrits précédemment en relation avec les figures 2, 3 et 4. Pour ces exemples, les première et deuxième substances photoluminescentes sont identiques et correspondent au YAG:Ce$^{3+}$. Ces matériaux photoluminescents se présentent sous la forme d'une poudre d'un mélange de microparticules de YAG:Ce$^{3+}$ obtenues par un procédé sol-gel et de nanoparticules de YAG:Ce$^{3+}$ obtenues par synthèse solvo-thermale en utilisant la voie glycol. On appelle rapport massique R du mélange le rapport entre la proportion de microparticules de YAG:Ce$^{3+}$ obtenues par un procédé sol-gel dans le mélange et la proportion de nanoparticules de YAG:Ce$^{3+}$ obtenues par synthèse solvo-thermale dans le mélange.

Selon un mode de réalisation, les précurseurs utilisés pour la fabrication des nanoparticules de YAG:Ce$^{3+}$ par synthèse solvo-thermale étaient l'acétate d'yttrium (III) hydraté, l'acétate de cérium (III) hydraté et l'isopropoxyde d'aluminium. L'acétate d'yttrium (III) hydraté correspondait au produit commercialisé par la société Strem Chemicals avec le numéro de produit 93-3930. L'acétate de cérium (III) hydraté correspondait au produit commercialisé par la société Aldrich avec le numéro de produit 529559. L'isopropoxyde d'aluminium correspondait au produit commercialisé par la société Alfa Aesar avec le numéro de produit 14007. Les précurseurs utilisés pour la fabrication des microparticules de YAG:Ce$^{3+}$ par un procédé sol-gel étaient le chlorure d'yttrium anhydre, le chlorure de cérium anhydre et l'isopropoxyde d'aluminium. Le chlorure d'yttrium anhydre correspondait au produit commercialisé par la société Alfa Aesar avec le numéro de produit 18682. Le chlorure de cérium anhydre correspondait au produit commercialisé par la société Alfa Aesar avec le numéro de produit 21112 et l'isopropoxyde d'aluminium correspondait au produit commercialisé par la société Alfa Aesar avec le numéro de produit 14007.

Pour les exemples utilisant une dispersion colloïdale de nanoparticules de YAG:Ce, cette dispersion colloïdale a été réalisée en mélangeant 56,16 mmol d'acétate d'yttrium hydraté, 0,05 mmol d'acétate de cérium (III) hydraté et 94,55 mmol d'isopropoxyde d'aluminium dans un mélange de solvants comprenant 450 mL de 1,4-butanediol et 60 mL de diéthylène glycol. Le mélange a été chauffé dans un autoclave à 300°C pendant 1 heure. La dispersion colloïdale obtenue a été refroidie jusqu'à la température ambiante. Les nanoparticules ont été précipitées par ajout en excès d'acétonitrile. La phase solide a été récupérée par centrifugation, puis a été séchée à 80°C pendant 12 heures pour former une poudre de nanoparticules. Pour le mélange avec les poudres sol-gel, une masse déterminée de cette poudre a été dispersée dans l'éthanol avec une concentration massique en nanoparticules de 2,5 %.

Pour les exemples utilisant un sol de YAG:Ce, le sol peut être réalisé en mélangeant 15 mmol de YCl$_3$ et 0,15 mmol de CeCl$_3$ dans 200 mL d'isopropanol. Ce mélange est chauffé à 85°C pendant 30 min. Ensuite 150 mL d'une solution de NaH à 0,51 mol/L dans l'isopropanol sont rajoutés à la solution de précurseurs de YCl$_3$ et CeCl$_3$ sous forte agitation. Ce mélange est chauffé à 85°C. Après 1h de chauffage, 26 mmol d'isopropoxyde d'aluminium sont pesés et rajoutés au mélange. La réaction se poursuit sous forte agitation pendant 4 heures à 85°C. A la fin de la réaction, la séparation du sol de YAG:Ce des sels NaCl est enfin réalisée comme cela a été décrit précédemment.

Des mesures du rendement quantique interne QY$_{int}$, du coefficient d'absorption Abs et du rendement quantique externe QY$_{ext}$ ont été réalisées pour les poudres photoluminescentes fabriquées. Le rendement quantique interne QY$_{int}$, le coefficient d'absorption Abs et le rendement quantique externe QY$_{ext}$ sont définis par les relations (2) suivantes :

$$QY_{int} = N_{em}/N_{abs} \qquad\qquad (2)$$
$$Abs = N_{abs}/N_{exc}$$
$$QY_{ext} = QY_{int} * Abs$$

où $N_{em}$ et $N_{abs}$ sont respectivement le nombre de photons émis et absorbés par la substance photoluminescente, $N_{exc}$ est le nombre de photons total émis par la source d'excitation. Les valeurs QY$_{int}$ et Abs sont directement données par l'appareil de mesure. Le rendement quantique externe QY$_{ext}$ est donc déduit de ces valeurs.

Les mesures du rendement quantique interne QY$_{int}$ et du coefficient d'absorption Abs ont été réalisées en utilisant un spectrophotomètre Hamamatsu CG-2 (250-900 nm) équipé d'une sphère d'intégration. Les valeurs de rendement quantique externe $QY_{ext}$ sont données avec une marge d'erreur de 5 %.

Exemple 1 de comparaison

Une poudre de microparticules de YAG:Ce$^{3+}$ commercialisée par la société Phosphortechnology sous la référence QMK58/F-U1 a été utilisée comme matériau photoluminescent de comparaison. La taille moyenne des particules était de 5 $\mu$m. Ces microparticules sont obtenues par synthèse par réaction à l'état solide.

Le rendement quantique interne $QY_{int}$, le coefficient d'absorption Abs et le rendement quantique externe $QY_{ext}$ ont été mesurés. Les résultats obtenus sont regroupés dans le tableau (I) ci-dessous.

**Tableau I**

| $QY_{int}$ (%) | Abs | $QY_{ext}$ (%) |
|---|---|---|
| 95 | 0,73 | 70 |

Exemple 2 de comparaison

Des sols de YAG:Ce ont été réalisés comme cela a été décrit précédemment. Les sols ont été séchés à une température de 80°C pendant 4 heures pour obtenir un xérogel. Le xérogel a été broyé au mortier pour former la poudre de précurseurs. Cette poudre a été recuite pendant 4 heures à différentes températures.

Le rendement quantique interne $QY_{int}$, le coefficient d'absorption Abs et le rendement quantique externe $QY_{ext}$ ont été mesurés. Les résultats obtenus sont regroupés dans le tableau (II) ci-dessous.

**Tableau II**

| Rapport massique R | Température de chauffage (°C) | $QY_{int}$ (%) | Abs | $QY_{ext}$ (%) |
|---|---|---|---|---|
| 100/0 | 1500 | 97 | 0,45 | 44 |
| 100/0 | 1600 | 90 | 0,5 | 45 |
| 100/0 | 1700 | 89 | 0,58 | 52 |

La figure 5 est une photographie obtenue par microscopie électronique à balayage de la poudre de microparticules pour laquelle la température de chauffage était de 1700°C. Comme cela apparaît sur la figure 5, les microparticules 40 de YAG:Ce$^{3+}$ sont séparées par des interstices 42 remplis d'air.

Le rendement quantique externe $QY_{ext}$ de la poudre comprenant seulement des microparticules obtenues selon un procédé sol-gel est inférieur de plus de 25 % au rendement quantique de la poudre de l'exemple 1.

Exemple 3 de comparaison

Des dispersions colloïdales de nanoparticules ont été réalisées comme cela a été indiqué précédemment. Les dispersions colloïdales ont été séchées à une température de 85°C pendant 2 heures puis ont été recuites dans les mêmes conditions que la poudre de microparticules pour comparaison. Avant recuit, la taille moyenne des nanoparticules était de 40 nm. Après recuit, la taille moyenne des nanoparticules était comprise entre 100 nm et 900 nm.

Le rendement quantique interne $QY_{int}$, le coefficient d'absorption Abs et le rendement quantique externe $QY_{ext}$ ont été mesurés. Les résultats obtenus sont regroupés dans le tableau (III) ci-dessous.

**Tableau III**

| Rapport massique R | Température de recuit (°C) | $QY_{int}$ (%) | Abs | $QY_{ext}$ (%) |
|---|---|---|---|---|
| 0/100 | 1500 | 49 | 0,71 | 35 |
| 0/100 | 1600 | 46 | 0,785 | 36 |
| 0/100 | 1700 | 47 | 0,88 | 41 |

La figure 6 est une photographie obtenue par microscopie électronique en transmission d'une dispersion colloïdale de nanoparticule de YAG:Ce obtenue par voie solvo-thermale avant l'étape de recuit thermique.

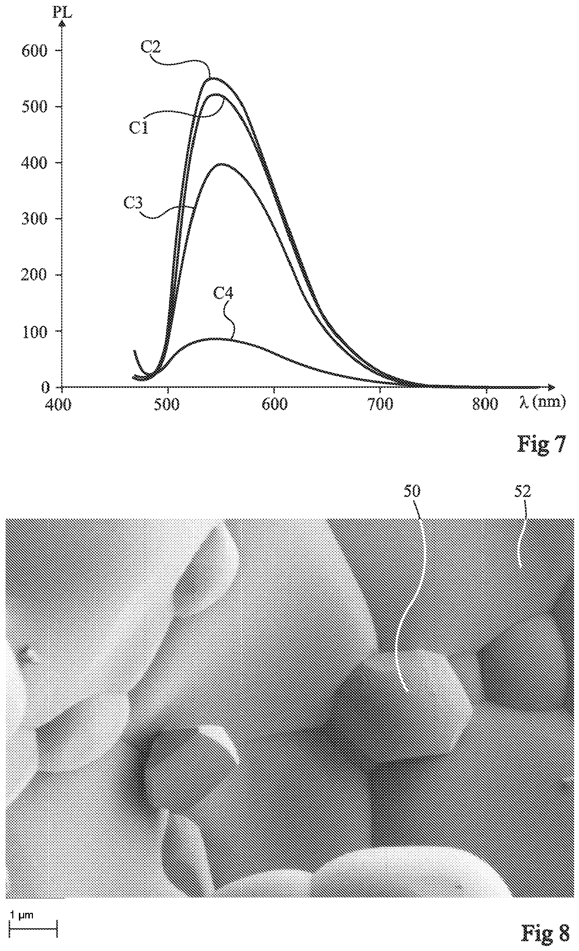

La figure 7 représente des courbes d'évolution C1, C2, C3 et C4 de l'intensité de photoluminescence PL, en unité arbitraire, en fonction de la longueur d'onde λ, en nanomètre, pour différentes températures de recuit, du rayonnement émis par les poudres photoluminescentes fabriquées à l'exemple 3 excitées par un rayonnement lumineux dont la longueur d'onde était de 460 nm. Les courbes C1, C2 et C3 ont été obtenues respectivement pour des températures de recuit de 1500°C, 1600°C et 1700°C. La courbe C4 a été obtenue en l'absence d'étape de recuit thermique. Le recuit thermique permet d'augmenter l'intensité de photoluminescence de la poudre de nanoparticules.

Le rendement quantique interne $QY_{int}$ de la poudre comprenant seulement des nanoparticules obtenues par synthèse solvo-thermale est nettement inférieur au rendement quantique interne $QY_{int}$ de la poudre de l'exemple 2 comprenant seulement des microparticules formées par un procédé sol-gel. Cependant, le coefficient d'absorption Abs des nanoparticules est nettement supérieur à celui des microparticules. Par exemple à 1700°C, les microparticules ont un rendement quantique interne environ 50 % plus élevé que celui des nanoparticules alors que le coefficient d'absorption Abs de ces dernières est environ 35 % plus élevé que celui des microparticules.

Les inventeurs ont mis en évidence qu'en mélangeant des microparticules et des nanoparticules, il était obtenu une compensation du manque d'absorption des microparticules par l'excellente absorption des nanoparticules.

## Exemple 4

Des mélanges de poudres de microparticules et de nanoparticules ont été réalisés selon le mode de réalisation décrit précédemment en relation avec la figure 2 dans lequel la dispersion colloïdale de nanoparticules est ajoutée à la poudre de microparticules après l'étape de recuit thermique des microparticules.

Le rendement quantique interne $QY_{int}$, le coefficient d'absorption Abs et le rendement quantique externe $QY_{ext}$ ont été mesurés. Les résultats obtenus sont regroupés dans le tableau (IV) ci-dessous.

**Tableau IV**

| Rapport massique R | Température de chauffage (°C) | $QY_{int}$ (%) | Abs | $QY_{ext}$ (%) |
|---|---|---|---|---|
| 85/15 | 1700 | 68 | 0,746 | 51 |
| 70/30 | 1500 | 70 | 0,74 | 52 |
| 70/30 | 1600 | 61 | 0,635 | 39 |
| 70/30 | 1700 | 72 | 0,82 | 59 |
| 50/50 | 1700 | 71 | 0,84 | 60 |

La figure 8 est une photographie obtenue par microscopie électronique à balayage de la poudre de nanoparticules et de microparticules du tableau (IV) pour laquelle le rapport R était de 70/30 et la température de chauffage était de 1700°C. Comme cela apparaît sur cette figure, des nanoparticules 50 de YAG:Ce de taille moyenne inférieure à 1 μm sont présentes dans les interstices entre les microparticules 52 de YAG:Ce dont la taille moyenne est comprise entre 5 et 8 pm. Cela a conduit à la formation d'un matériau photoluminescent 10 dense et compact.

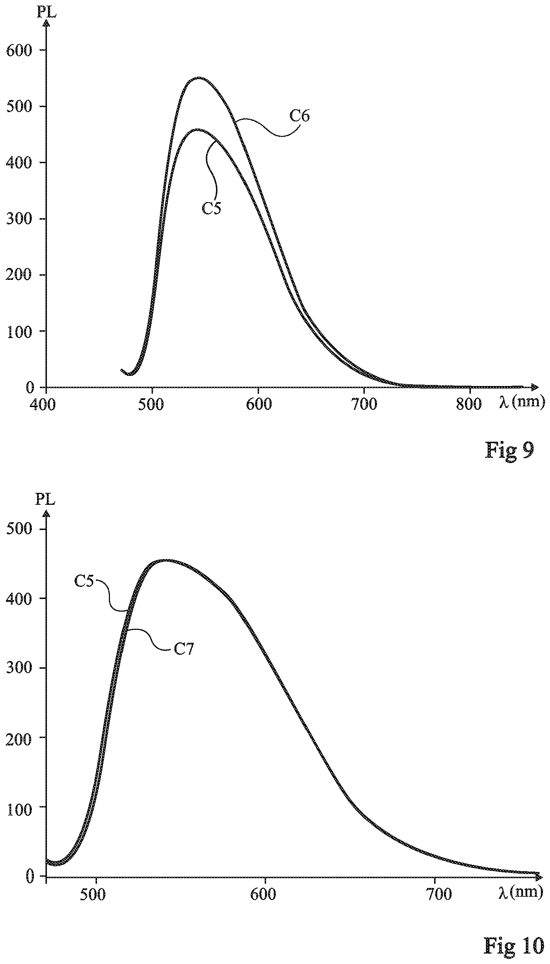

La figure 9 représente des courbes d'évolution C5 et C6 de l'intensité de photoluminescence PL, en unité arbitraire, en fonction de la longueur d'onde λ, en nanomètre, du rayonnement émis par des poudres photoluminescentes excitées par un rayonnement lumineux dont la longueur d'onde était de 460 nm. La courbe C5 a été obtenue pour la poudre de microparticules du tableau (II) dont la température de chauffage était de 1700°C et la courbe C6 a été obtenue pour la poudre de microparticules et de nanoparticules du tableau (IV) pour laquelle le rapport R était de 70/30 et la température de chauffage était de 1700°C.

Le rendement quantique externe est amélioré par rapport à une poudre comprenant seulement des microparticules de YAG:Ce$^{3+}$ formées par un procédé sol-gel.

## Exemple 5

Un mélange de poudres de microparticules et de nanoparticules a été réalisé selon le mode de réalisation décrit précédemment en relation avec la figure 3 dans lequel la dispersion colloïdale de nanoparticules est ajoutée à la poudre du xérogel broyé.

Le rendement quantique interne $QY_{int}$, le coefficient d'absorption Abs et le rendement quantique externe $QY_{ext}$ ont été mesurés. Les résultats obtenus sont regroupés dans le tableau (V) ci-dessous.

**Tableau V**

| Rapport massique R | Température de chauffage (°C) | $QY_{int}$ (%) | Abs | $QY_{ext}$ (%) |
|---|---|---|---|---|
| 50/50 | 1700 | 55 | 0,83 | 46 |

La figure 10 représente des courbes d'évolution C5 et C7 de l'intensité de photoluminescence PL, en unité arbitraire, en fonction de la longueur d'onde λ, en nanomètre, du rayonnement émis par des poudres photoluminescentes excitées par un rayonnement lumineux dont la longueur d'onde était de 460 nm. La courbe C6 a été obtenue pour la poudre de microparticules du tableau (V).

Le rendement quantique externe n'est pas amélioré par rapport à une poudre comprenant seulement des microparticules de YAG:$Ce^{3+}$.

Exemple 6

Des mélanges de poudres de microparticules et de nanoparticules ont été réalisés selon le mode de réalisation décrit précédemment en relation avec la figure 3 dans lequel la dispersion colloïdale de nanoparticules est ajoutée au sol avant l'obtention du gel.

Le rendement quantique interne $QY_{int}$, le coefficient d'absorption Abs et le rendement quantique externe $QY_{ext}$ ont été mesurés. Les résultats obtenus sont regroupés dans le tableau (VI) ci-dessous.

**Tableau VI**

| Rapport massique R | Température de chauffage (°C) | $QY_{int}$ (%) | Abs | $QY_{ext}$ (%) |
|---|---|---|---|---|
| 80/20 | 1700 | 88 | 0,8 | 70 |
| 70/30 | 1700 | 84 | 0,78 | 66 |
| 50/50 | 1700 | 66 | 0,85 | 56 |
| 30/70 | 1700 | 69 | 0,82 | 57 |

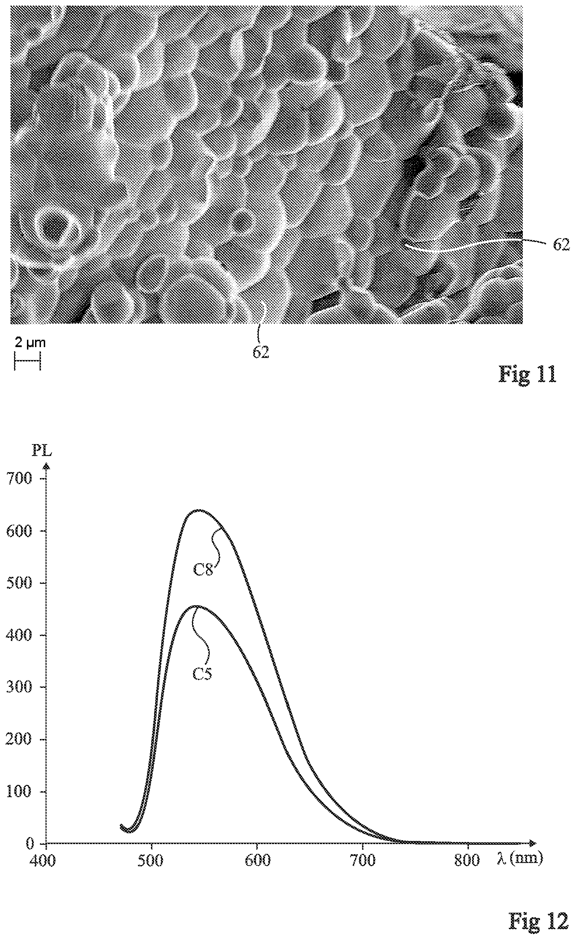

La figure 11 est une photographie obtenue par microscopie électronique à balayage de la poudre de nanoparticules et de microparticules du tableau (VI) pour laquelle le rapport R était de 80/20. Comme cela apparaît sur cette figure, des nanoparticules 60 de YAG:Ce de taille moyenne inférieure à 1 μm sont présentes dans les interstices entre les microparticules 62 de YAG:Ce dont la taille moyenne est comprise entre 3,5 et 6 μm. Cela a conduit, comme dans l'exemple 4, à la formation d'un matériau photoluminescent 10 dense et compact.

La figure 12 représente des courbes d'évolution C5 et C8 de l'intensité de photoluminescence PL, en unité arbitraire, en fonction de la longueur d'onde λ, en nanomètre, du rayonnement émis par des poudres photoluminescentes excitées par un rayonnement lumineux dont la longueur d'onde était de 460 nm. La courbe C8 a été obtenue pour la poudre de microparticules du tableau (VI) dont le rapport massique R était de 80/20. Cette courbe montre une nette amélioration de l'intensité PL par rapport à la poudre de microparticules seules obtenues par le procédé sol-gel et recuite dans les mêmes conditions.

Par ailleurs, le rendement quantique externe $QY_{ext}$ des poudres formées à l'exemple 6 est proche du rendement quantique externe $QY_{ext}$ de la poudre de l'exemple 1. Le rendement quantique externe $QY_{ext}$ de la poudre de l'exemple 6 ayant le rapport massique 80/20 est égal au rendement quantique externe $QY_{ext}$ de la poudre de l'exemple 1. Il a donc été obtenu un matériau photoluminescent par voie sol-gel aussi performant que les poudres commercialisées, issues des synthèses par voie solide, sans aucun traitement sous atmosphère d'hydrogène.

**Revendications**

1. Procédé de fabrication d'un matériau photoluminescent, comprenant les étapes suivantes :

    (1) fabrication selon un procédé sol-gel d'un sol puis d'un gel de premiers précurseurs d'une première substance photoluminescente à partir du sol, la première substance étant un aluminate ou un silicate ;
    (2) broyage du gel ;
    (3) éventuellement, recuit du gel pour la formation de premières particules (12) de la première substance dont la taille moyenne est comprise entre 1 μm et 20 μm ;
    (4) fabrication d'une dispersion colloïdale de deuxièmes particules (14) d'une deuxième substance photoluminescente, différente de la première substance ou identique à la première substance, dont la taille moyenne est comprise entre 5 nm et 400 nm, la deuxième substance étant un aluminate, un silicate, un nitrure, un fluorure ou un sulfure, l'étape (4) comprenant une étape de synthèse solvo-thermale des deuxièmes particules ;

(5) mélange de la dispersion colloïdale au sol à l'étape (1) avant la formation du gel ou aux premières particules après l'étape (3) ; et

(6) recuit du mélange obtenu à l'étape (5), d'où il résulte une augmentation de la compacité du mélange, la taille moyenne des deuxièmes particules après recuit étant comprise entre 100 nm et 900 nm.

**2.** Procédé selon la revendication 1, dans lequel l'étape de recuit à l'étape (6) est réalisée à une température comprise entre 1100°C et 1700°C.

**3.** Procédé selon la revendication 1 ou 2, dans lequel la dispersion colloïdale est dans un solvant comprenant au moins un alcool.

**4.** Procédé selon l'une quelconque des revendications 1 à 3, dans lequel la première substance photoluminescente et la deuxième substance photoluminescente comprennent chacune majoritairement un oxyde d'yttrium et d'aluminium.

**5.** Procédé selon la revendication 4, dans lequel la première substance photoluminescente et la deuxième substance photoluminescente comprennent chacune majoritairement un oxyde d'yttrium et d'aluminium contenant, en outre, au moins un des éléments suivants : cérium, europium, chrome, néodyme, terbium, dysprosium, praséodyme ou gadolinium.

**6.** Procédé selon l'une quelconque des revendications 1 à 5, dans lequel le rapport massique entre les premières particules (12) et les deuxièmes particules (14) est compris entre 0,01 et 99.

**7.** Procédé selon l'une quelconque des revendications 1 à 6, dans lequel la première substance photoluminescente comprend des microparticules de YAG:Ce et la deuxième substance photoluminescente comprend des nanoparticules de YAG:Ce préparée par voie solvo-thermale.

**Patentansprüche**

**1.** Ein Verfahren zur Herstellung eines photolumineszenten Materials, das die folgenden Schritte aufweist:

(1) Herstellung gemäß eines Sol-Gel-Verfahrens eines Sols und dann eines Gels von ersten Präkursoren einer ersten photolumineszenten Substanz aus dem Sol, wobei die erste photolumineszente Substanz ein Aluminat oder ein Silikat ist;

(2) Mahlen des Gels;

(3) gegebenenfalls Tempern des Gels zum Bilden erster Partikel (12) der ersten Substanz mit einer durchschnittlichen Größe zwischen 1 $\mu$m und 20 $\mu$m;

(4) Herstellen einer kolloidalen Dispersion von zweiten Partikeln (14) einer zweiten photolumineszenten Substanz, die sich von der ersten photolumineszenten Substanz unterscheidet oder mit der ersten photolumineszenten Substanz identisch ist, deren durchschnittliche Größe zwischen 5 nm und 400 nm liegt; wobei die zweite Substanz ein Aluminat, ein Silikat, ein Nitrid, ein Fluorid oder ein Sulfid ist, wobei Schritt (4) einen Schritt der Solvothermalsynthese der zweiten Partikel aufweist;

(5) Mischen der kolloidalen Dispersion mit dem Sol in Schritt (1) vor der Gelbildung oder mit den ersten Partikeln nach Schritt (3); und

(6) Tempern der in Schritt (5) erhaltenen Mischung, was zu einer Erhöhung der Kompaktheit der Mischung führt, wobei die durchschnittliche Größe der zweiten Partikel nach dem Tempern zwischen 100 nm und 900 nm liegt.

**2.** Verfahren nach Anspruch 1, wobei der Temperschritt in Schritt (6) bei einer Temperatur zwischen 1100°C und 1700°C durchgeführt wird.

**3.** Verfahren nach einem der Ansprüche 1 oder 2, wobei die kolloidale Dispersion in einem Lösungsmittel ist, das wenigstens einen Alkohol aufweist.

**4.** Verfahren nach einem der Ansprüche 1 bis 3, wobei die erste photolumineszente Substanz und die zweite photolumineszente Substanz jeweils hauptsächlich ein Yttrium-Aluminiumoxid aufweisen.

**5.** Verfahren nach Anspruch 4, wobei die erste photolumineszente Substanz und die zweite photolumineszente Substanz jeweils hauptsächlich ein Yttrium-Aluminiumoxid aufweisen, das ferner wenigstens eines der folgenden Elemente enthält: Cer, Europium, Chrom, Neodym, Terbium, Dysprosium, Praseodym oder Gadolinium.

**6.** Verfahren nach einem der Ansprüche 1 bis 5, wobei das Massenverhältnis zwischen den ersten Partikeln (12) und den zweiten Partikeln (14) zwischen 0,01 und 99 liegt.

**7.** Verfahren nach einem der Ansprüche 1 bis 6, wobei die erste photolumineszente Substanz YAG:Ce-Partikel und die zweite photolumineszente Substanz YAG:Ce-Nanopartikel aufweist, die durch Solvothermalverfahren hergestellt werden.

## Claims

**1.** A method of manufacturing a photoluminescent material, comprising the steps of:

(1) manufacturing according to a sol-gel method a sol and then a gel of first precursors of a first photoluminescent substance from the sol, the first photoluminescent substance being an aluminate or a silicate;
(2) grinding the gel;
(3) possibly, annealing the gel to form first particles (12) of the first substance having an average size in the range from 1 $\mu$m to 20 $\mu$m;
(4) manufacturing a colloidal dispersion of second particles (14) of a second photoluminescent substance, different from the first substance or identical to the first substance, having an average size in the range from 5 nm to 400 nm, the second substance being an aluminate, a silicate, a nitride, a fluoride or a sulfide, step (4) comprising a step of solvothermal synthesis of the second particles;
(5) mixing the colloidal dispersion with the sol at step (1) before the forming of the gel or with the first particles after step (3); and
(6) annealing the mixture obtained at step (5), which results in an increase in the compactness of the mixture, the average size of the second particles after anneal being in the range from 100 nm to 900 nm.

**2.** The method of claim 1, wherein the anneal step at step (6) is carried out at a temperature in the range from 1,100°C to 1,700°C.

**3.** The method of claim 1 or 2, wherein the colloidal dispersion is in a solvent comprising at least one alcohol.

**4.** The method of any of claims 1 to 3, wherein the first photoluminescent substance and the second photoluminescent substance each mainly comprise an yttrium aluminum oxide.

**5.** The method of claim 4, wherein the first photoluminescent substance and the second photoluminescent substance each mainly comprise an yttrium aluminum oxide further containing at least one of the following elements: cerium, europium, chromium, neodymium, terbium, dysprosium, praseodymium, or gadolinium.

**6.** The method of any of claims 1 to 5, wherein the mass ratio of the first particles (12) and of the second particles (14) is in the range from 0.01 to 99.

**7.** The method of any of claims 1 to 6, wherein the first photoluminescent substance comprises YAG:Ce particles and the second photoluminescent substance comprises YAG:Ce nanoparticles prepared by solvothermal method.

Fig 1

**Synthèse Solvo-thermale**

**Synthèse Sol-Gel**

| | |
|---|---|
| 20 — Mélange des précurseurs | 24 — Sol |
| 21 — Chauffage | 25 — Gel |
| 22 — Récupération nanoparticules | 26 — Séchage du Gel |
| 23 — Dispersion nanoparticules | 27 — Broyage du Gel |
| | 28 — Recuit |
| | 29 — Mélange + séchage |
| | 30 — Recuit |

Fig 2

**Synthèse Solvo-thermale**

**Synthèse Sol-Gel**

| | |
|---|---|
| 20 — Mélange des précurseurs | 24 — Sol |
| 21 — Chauffage | 25 — Gel |
| 22 — Récupération nanoparticules | 26 — Séchage du Gel |
| 23 — Dispersion nanoparticules | 27 — Broyage |
| | 31 — Mélange + séchage |
| | 32 — Recuit |

Fig 3

Synthèse Solvo-thermale          Synthèse Sol-Gel

| | |
|---|---|
| 20 — Mélange des précurseurs | Sol — 24 |
| 21 — Chauffage | Mélange — 33 |
| 22 — Récupération nanoparticules | Gel + nanoparticules — 34 |
| 23 — Dispersion nanoparticules | Séchage — 35 |
| | Broyage — 36 |
| | Recuit — 37 |

**Fig 4**

**Fig 5**

**Fig 6**

14

Fig 7

Fig 8

Fig 9

Fig 10

Fig 11

Fig 12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1457877
- FR 2978448
- US 2009208398 A

**Littérature non-brevet citée dans la description**

- Sol-gel based YAG:Tb3+ or Eu3+ phosphors for application in lighting sources. **POTDEVIN et al.** Journal of Physics D: Applied Physics. Institute of Physics Publishing LTD, 07 Septembre 2005, vol. 38, 3251-3260
- **POTDEVIN et al.** Sol-gel based YAG:Ce3+ powders for application in LED devices. *Physica Status Solidi (C),* 01 Janvier 2007, vol. 4 (1), 65-69
- **ABDELHAY ABOULAICH et al.** Ce-Doped YAG Nanophosphor and Red Emitting CuInS2/ZnS Core/Shell Quantum Dots for Warm White Light-Emitting Diode with High Color Rendering Index. *ACS Applied Materials & Interfaces,* 08 Janvier 2014, vol. 6 (1), 252-258